(19) Europäisches Patentamt / European Patent Office / Office européen des brevets

(11) **EP 2 712 252 A1**

(12) **EUROPEAN PATENT APPLICATION**
published in accordance with Art. 153(4) EPC

(43) Date of publication:
26.03.2014 Bulletin 2014/13

(51) Int Cl.:
*H04W 72/04* (2009.01)

(21) Application number: 12800153.4

(22) Date of filing: 14.06.2012

(86) International application number:
PCT/CN2012/076944

(87) International publication number:
WO 2012/171471 (20.12.2012 Gazette 2012/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.06.2011 CN 201110162122

(71) Applicant: Huawei Technologies Co., Ltd
Shenzhen, Guangdong 518129 (CN)

(72) Inventor: LIU, Jianghua
Shenzhen
Guangdong 518129 (CN)

(74) Representative: Körber, Martin Hans et al
Mitscherlich & Partner
Patent- und Rechtsanwälte
Sonnenstrasse 33
80331 München (DE)

(54) **DATE TRANSMISSION METHOD AND USER EQUIPMENT**

(57) Embodiments of the present invention provide a data transmission method and a user equipment. The method includes: mapping a state expressed by information elements into two transmit groups, where the state is a response to at least one channel group, where the channel group includes one first channel and one second channel, and each transmit group includes one first sequence, one second sequence, and one modulation symbol, where a first sequence and a second sequence in each transmit group are determined according to a first channel in the same channel group of the at least one channel group; in each transmit group, using the second sequence to spread the modulation symbol, and multiplexing the spread modulation symbol and the first sequence into one resource block; and transmitting the resource block over an antenna or an antenna port defined by the first sequence. In the embodiments of the present invention, two sequences in each transmit group are determined according to the same first channel. Therefore, it can be ensured that channels corresponding to various sequences are in the same resource block, thereby relieving the scheduling limitation on resource allocation.

Map a state expressed by information elements into two transmit groups, where each transmit group includes one first sequence, one second sequence, and one modulation symbol, and the first sequence and second sequence in each transmit group are determined according to a first channel in the same channel group of the at least one channel group — 101

Use a second sequence in a transmit group to spread a modulation symbol located in the same transmit group, and multiplex the spread modulation symbol and a first sequence located in the same transmit group as the second sequence into one resource block — 102

Transmit the resource block over an antenna or an antenna port defined by the first sequence multiplexed in the resource block — 103

FIG. 1

EP 2 712 252 A1

**Description**

**CROSS-REFERENCE TO RELATED APPLICATION**

This application claims priority to Chinese Application No. 201110162122.7, filed with the Chinese Patent Office on June 16, 2011 and entitled "DATA TRANSMISSION METHOD AND USER EQUIPMENT", which is incorporated herein by reference in its entirety.

**TECHNICAL FIELD**

Embodiments of the present invention relate to the wireless communications field, and in particular, to a state data transmission method and a user equipment.

**BACKGROUND**

In order to further improve the throughput and peak rate of a wireless communication system, a carrier aggregation technology is applied in an LTE (Long Term Evolution, Long Term Evolution) system, that is, more than one carrier is used simultaneously to transmit data to a user equipment, and the data transmission rate of the user equipment is proportional to the number of utilized carriers.

When using multiple carriers to transmit data to a user equipment simultaneously, a base station (such as eNB) may transmit a PDSCH (Physical Downlink Shared Channel, physical downlink shared channel) over each carrier, and the PDSCH has a corresponding PDCCH (Physical Downlink Control Channel, physical downlink control channel) to be transmitted. The PDCCH includes information such as resource allocation information, a modulation and coding manner, and a transport block size of a PDSCH corresponding to the PDCCH. Two transmission manners are applicable to the PDCCH. One is to transmit a PDCCH and its corresponding PDSCH over the same carrier, and the other is to transmit all PDCCHs over the same carrier, which is known as cross-carrier scheduling, where the same carrier may be a main carrier or a secondary carrier.

A user equipment (UE, User Equipment) may detect the PDCCH corresponding to the PDSCH scheduled on each carrier. If the PDCCH is detected correctly, the user equipment detects the corresponding PDSCH according to transmission format information in the PDCCH, and generates 1-bit or 2-bit HARQ (Hybrid Automatic Retransmission Request, hybrid automatic repeat request) ACK/NACK (Acknowledgement/Negative Acknowledgement, acknowledgment/negative acknowledgment) information according to a result of the PDSCH detection. When one transport block exists in the PDSCH, the user equipment generates a 1-bit ACK or NACK according to whether the transport block is detected correctly or not; and when two transport blocks exist in the PDSCH, the user equipment generates a 1-bit ACK or NACK according to whether each transport block is detected correctly or not, which results in 2 bits of HARQ ACK/NACK information in total. Assuming that 2 bits of HARQ ACK/NACK information is generated for the PDSCH on each carrier, the user equipment needs to generate $2 \times M$ bits of HARQ ACK/NACK information for the PDSCHs on M carriers, where M is a positive integer. If the PDCCH corresponding to the PDSCH on a specific carrier is not correctly detected by the user, the user equipment believes that, on this carrier, no data is scheduled for the user equipment, and therefore, the user equipment does not perform any operation, which is known as DTX (Discontinuous transmission, discontinuous transmission).

On an uplink PUCCH (Physical Uplink Control Channel, physical uplink control channel), the user equipment needs to feed back HARQ ACK/NACK/DTX information corresponding to PDSCHs on all carriers to the base station, and then, according to the information fed back by the user equipment, the base station determines whether to transmit a new transport block or to retransmit the transport block corresponding to the NACK or DTX. In an LTE system, channel selection (channel selection) is to select a channel from a group of candidate channels according to the HARQ ACK/NACK/DTX information to be fed back, and at the same time select a modulation symbol from a group of candidate modulation symbols, and then send the selected modulation symbol by using the selected channel. The HARQ ACK/NACK/DTX information may be 2 to 4 bits.

In the prior art, when a part of HARQ states are transmitted, a data sequence and a reference signal sequence on each antenna come from different channels. Therefore, to ensure normal working of a transmit diversity scheme in the prior art, it is required that the different channels must be located in the same resource block, which makes it necessary to limit the allocation of PDCCHs and uplink channel resources in the existing transmit diversity scheme, thereby increasing the system complexity.

**SUMMARY**

Embodiments of the present invention provide a data transmission method and a user equipment, which can relieve scheduling limitation on resource allocation.

In one aspect, a data transmission method is provided, including: mapping a state expressed by at least two information elements into two transmit groups, where, the state expressed by the at least two information elements is a response to at least one channel group, wherein the channel group comprises one first channel and one second channel, and each transmit group of the two transmit groups comprises one first sequence, one second sequence, and one modulation symbol, wherein the first sequence and the second sequence in each transmit group are determined according to a first channel in one channel group of the at least one channel group, wherein the first sequence in the transmit group defines an antenna or an antenna port, and the second sequence is used to spread a modulation symbol located in the each transmit group as the second sequence;

using a second sequence in the transmit group to spread a modulation symbol located in the transmit group, and multiplexing the spread modulation symbol and a first sequence located in the each transmit group as the second sequence into one resource block; and

transmitting the resource block over an antenna or an antenna port defined by the first sequence multiplexed in the resource block.

In another aspect, a user equipment is provided, including: a mapping unit, configured to map a state expressed by at least two information elements into two transmit groups, wherein, the state expressed by the at least two information elements is a response to at least one channel group, wherein the channel group includes one first channel and one second channel, and each transmit group of the two transmit groups includes one first sequence, one second sequence, and one modulation symbol, wherein the first sequence and the second sequence in each transmit group are determined according to a first channel in one channel group of the at least one channel group, wherein the first sequence in the transmit group defines an antenna or an antenna port, and the second sequence is used to spread a modulation symbol located in the transmit group as the second sequence; a multiplexing unit, configured to use a second sequence in the transmit group mapped by the mapping unit to spread a modulation symbol located in the same transmit group, and multiplex the spread modulation symbol and a first sequence located in the transmit group as the second sequence into one resource block; and a transmitting unit, configured to transmit the resource block over an antenna or an antenna port defined by the first sequence multiplexed by the multiplexing unit in the resource block.

In the embodiments of the present invention, a first sequence and a second sequence in each transmit group are determined according to only one first channel. Therefore, it can be ensured that channels corresponding to the first sequence and the second sequence of each transmit group are in the same resource block, thereby avoiding the limitation in the prior art that multiple channels must be in the same resource block, and relieving the scheduling limitation on resource allocation.

## BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a data transmission method according to an embodiment of the present invention;
FIG. 2 is a schematic diagram of a data transmission manner under one state;
FIG. 3 is a schematic diagram of a data transmission manner under another state;
FIG. 4 is a schematic diagram of a data transmission manner according to an embodiment of the present invention;
FIG. 5 is a schematic diagram of a data transmission manner according to another embodiment of the present invention; and
FIG. 6 is a schematic block diagram of a user equipment according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

A user equipment UE, also referred to as a mobile terminal (Mobile Terminal), or a mobile user equipment, and so on, may communicate with one or more core networks through a radio access network (such as RAN, Radio Access Network). The user equipment may be a mobile device such as a mobile phone (or referred to as a "cellular" phone), or a computer equipped with a mobile terminal, and for example, may be a mobile device that is portable, pocket-sized, handheld, built in a computer, or mounted in a vehicle, which exchanges language and/or data with the radio access network.

The embodiments of the present invention provide a channel selection-based transmit diversity scheme to achieve the transmit diversity gain and avoid the limitation on the allocation of PDCCHs and uplink control channel resources.

In the channel selection for dynamic scheduling on multiple carriers, the selected candidate channel depends on the PDCCH. If a PDCCH is detected on a main carrier and the transmission mode of a PDSCH corresponding to the PDCCH allows only one transport block, one channel can be determined from the PDCCH; and if the transmission mode of the PDSCH corresponding to the PDCCH allows two transport blocks, two channels can be determined from the PDCCH. In the determined channels, the first channel is obtained according to a first CCE (Control Channel Element, control channel element) that forms the PDCCH and according to a set mapping relationship between channels and control channel elements, and the second channel is a result of mapping a next control channel element whose sequence number is contiguous to the first control channel element of the PDCCH. If a PDCCH is detected on a secondary carrier, an ACK/NACK resource indicator in the PDCCH will allocate one or two channels explicitly according to the transmission mode of a corresponding PDSCH. The channels determined according to the PDCCH constitute candidate channels, and then channel selection is performed according to a result of downlink channel detection. For ease of description and universal applicability, the following takes two carriers as an example for description.

It is assumed that carrier aggregation is performed by using two carriers and that each carrier has only one data transport block. Therefore, the user equipment needs to feed back two bits of HARQ ACK/NACK information corresponding to the one transport block respectively. The channel selection is specifically shown in Table 1.

**Table 1: 2-bit channel selection**

| HARQ-ACK(0) | HARQ-ACK(1) | Channel | Modulation symbol |
|---|---|---|---|
| ACK | ACK | 1 | -1 |
| ACK | NACK/DTX | 0 | -1 |
| NACK/DTX | ACK | 1 | 1 |
| NACK | NACK/DTX | 0 | 1 |
| DTX | NACK/DTX | No transmitting | |

In Table 1, HARQ-ACK(0) corresponds to a transport block on the first carrier, HARQ-ACK(1) corresponds to a transport block on the second carrier, and NACK/DTX indicates that a specific transport block is not detected correctly (NACK) or a PDCCH is not detected correctly (DTX). In Table 1, when HARQ-ACK(0) and HARQ-ACK(1) are ACK and ACK respectively, channel 1 and QPSK (Quadrature Phase Shift Key, quadrature phase shift key) modulation symbol -1 are selected.

The above channel refers to a sequence. When the selected channel is used to transmit the selected modulation symbol in the PDCCH, a code division multiplexing structure of a time-frequency two-dimensional spread spectrum is applied. That is, each user equipment spreads the modulation symbol by using a specific time-frequency two-dimensional spread spectrum sequence, that is, a data sequence, and then multiplexes the spread modulation symbol onto a corresponding resource block. To perform coherent demodulation on the transmitted modulation symbol, another time-frequency two-dimensional spread spectrum sequence, that is, a reference signal sequence, is sent along with the modulation symbol as a demodulation reference signal for channel estimation. Therefore, one channel corresponds to both a data sequence and a reference signal sequence.

The spread modulation symbol and the demodulation reference signal are time-division-multiplexed into one resource block. One resource block is composed of twelve continuous subcarriers in the frequency domain and seven (conventional cyclic prefix) or six (extended cyclic prefix) continuous SC-FDMA (Single carrier frequency domain multiplexing access, single carrier frequency domain multiple access) symbols in the time domain. When the conventional cyclic prefix is applied, three symbols in the middle of a resource block are used to transmit the demodulation reference signal, and the remaining four symbols are used to transmit the spread modulation symbol.

The data sequence is a kronecker product of a 4-length orthogonal sequence and a 12-length base sequence with a CAZAC (Constant Amplitude Zero Auto Correlation, constant amplitude zero auto correlation) feature or a cyclic shift of the base sequence; and the reference signal sequence is a kronecker product of a 3-length orthogonal sequence and a 12-length base sequence with a CAZAC feature or a cyclic shift of the base sequence.

In an LTE system in which a majority of user equipments are configured to have 2 or 4 transmit antennas, in order to improve the transmission performance of the PUCCH ACK/NACK and ensure the coverage of the LTE system, transmit diversity may be implemented by using the multiple transmit antennas configured for a user equipment. However, compared with a 2-antenna transmit diversity scheme, a 4-antenna transmit diversity scheme achieves a limited gain and requires more resources, and therefore, a 2-antenna transmit diversity scheme for channel selection needs to be designed.

For a 4-bit channel, that is, in a scenario where there are two carriers and the PDSCH on each carrier has two data transport blocks, the 2-antenna transmit diversity scheme may be selected. Each bit has two states ACK and NACK/DTX, and therefore, 4 bits have 16 states in total. The 16 states are expressed by a combination of 4 channels and 4 QPSK modulation symbols. Channel i corresponds to data sequence ai and reference signal sequence bi, that is, channel i -> [ai, bi]. In this scheme, it may be assumed that "0" represents NACK or DTX and "1" represents ACK, and vice versa. The 4 QPSK symbols are denoted by s0, s1, s2, and s3 respectively, and s0*, s1*, s2*, and 3* respectively denote conjugates of the QPSK symbols. The transmit diversity scheme is specifically shown in Table 2.

**Table 2: Transmit diversity scheme for 4-bit channel selection**

| State | Antenna 1 | | | | Antenna 2 | | | |
|---|---|---|---|---|---|---|---|---|
| | Channel 1 | Channel 2 | Channel 3 | Channel 4 | Channel 1 | Channel 2 | Channel 3 | Channel 4 |
| 0000 | s0 | | | | | s0* | | |
| 0001 | s1 | | | | | s1* | | |
| 0010 | s2 | | | | | s2* | | |
| 0011 | s3 | | | | | s3* | | |
| 0100 | | s0 | | | -s0* | | | |
| 0101 | | s1 | | | -s1* | | | |
| 0110 | | s2 | | | -s2* | | | |
| 0111 | | s3 | | | -s3* | | | |
| 1000 | | | s0 | | | | | s0* |
| 1001 | | | s1 | | | | | s1* |
| 1010 | | | s2 | | | | | s2* |
| 1011 | | | s3 | | | | | s3* |
| 1100 | | | | s0 | | | -s0* | |
| 1101 | | | | s1 | | | -s1* | |
| 1110 | | | | s2 | | | -s2* | |
| 1111 | | | | s3 | | | -s3* | |

The transmit diversity scheme is described by taking the state "0000" in Table 2 as an example. When a user equipment detects that the ACK/NACK state of four data transport blocks on two downlink carriers is "0000", the selected two channels are 1 and 2, and then s0 is transmitted over channel 1 on antenna 1, and s0* is transmitted over channel 2 on antenna 2.

In addition, another transmit diversity scheme specific to 4-bit channel selection is provided. The transmit diversity is specifically shown in Table 3, where R under each channel represents a reference signal sequence and D represents a data sequence. As can be seen from Table 3, for each state, the data sequence and the modulation symbol that are used on each antenna are the same as those in Table 2; and the difference is that the reference signal sequence on each antenna is independent of the HARQ state, that is, the reference signal sequence on antenna 1 is always the reference signal sequence of channel 1, and the reference signal sequence on antenna 2 is always the reference signal sequence of channel 2.

**Table 3: Transmit diversity scheme for 4-bit channel selection**

| State | Antenna 1 | | | | | | | | Antenna 2 | | | | | | | |
|---|---|---|---|---|---|---|---|---|---|---|---|---|---|---|---|---|
| | Channel 1 | | Channel 2 | | Channel 3 | | Channel 4 | | Channel 1 | | Channel 2 | | Channel 3 | | Channel 4 | |
| | R | D | R | D | R | D | R | D | R | D | R | D | R | D | R | D |
| 0000 | 1 | s0 | | | | | | | | | 1 | s0* | | | | |
| 0001 | 1 | s1 | | | | | | | | | 1 | s1* | | | | |
| 0010 | 1 | s2 | | | | | | | | | 1 | s2* | | | | |
| 0011 | 1 | s3 | | | | | | | | | 1 | s3* | | | | |
| 0100 | 1 | | | s0 | | | | | 1 | -s0* | | | | | | |
| 0101 | 1 | | | s1 | | | | | 1 | -s1* | | | | | | |
| 0110 | 1 | | | s2 | | | | | 1 | -s2* | | | | | | |
| 0111 | 1 | | | s3 | | | | | 1 | -s3* | | | | | | |
| 1000 | 1 | | | | | s0 | | | | | 1 | | | | | s0* |
| 1001 | 1 | | | | | s1 | | | | | 1 | | | | | s1* |
| 1010 | 1 | | | | | s2 | | | | | 1 | | | | | s2* |
| 1011 | 1 | | | | | s3 | | | | | 1 | | | | | s3* |
| 1100 | 1 | | | | | | | s0 | | | 1 | | | -s0* | | |
| 1101 | 1 | | | | | | | s1 | | | 1 | | | -s1* | | |
| 1110 | 1 | | | | | | | s2 | | | 1 | | | -s2* | | |
| 1111 | 1 | | | | | | | s3 | | | 1 | | | -s3* | | |

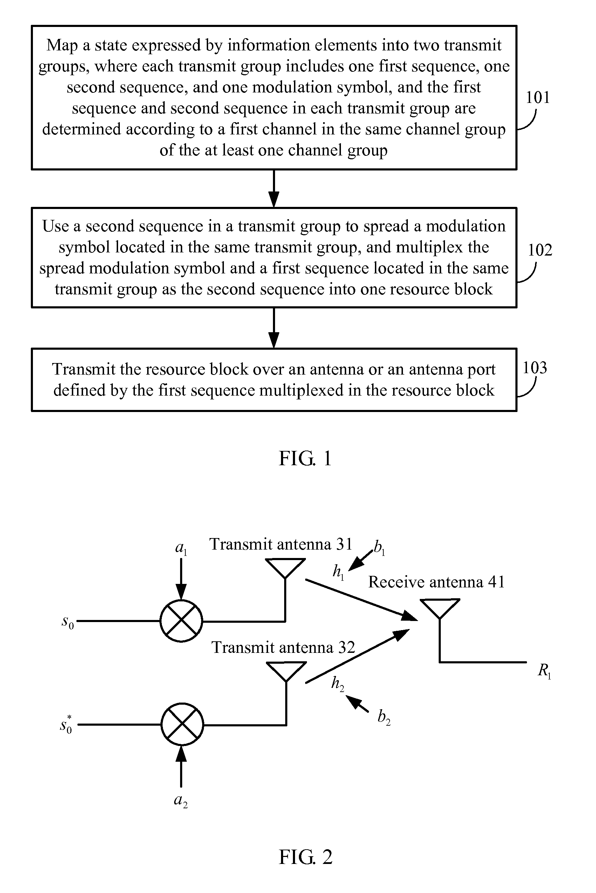

FIG. 1 is a schematic diagram of a data transmission method according to an embodiment of the present invention. The method in FIG. 1 may be executed by a user equipment.

Step 101: Map a state expressed by at least two information elements into two transmit groups, where, the state expressed by the at least two information elements is a response to at least one channel group, where the channel group includes one first channel and one second channel, and each transmit group of the two transmit groups includes one first sequence, one second sequence, and one modulation symbol, where a first sequence and a second sequence in each transmit group are determined according to a first channel in the same channel group of the at least one channel group, where the first sequence in the transmit group defines an antenna or an antenna port, and the second sequence is used to spread a modulation symbol located in the same transmit group as the second sequence.

Step 102: Use a second sequence in a transmit group to spread a modulation symbol located in the same transmit group, and multiplex the spread modulation symbol and a first sequence located in the same transmit group as the second sequence into one resource block.

Step 103: Transmit the resource block over an antenna or an antenna port defined by the first sequence multiplexed in the resource block.

In the embodiment of the present invention, a first sequence and a second sequence in each transmit group are determined according to only one first channel. Therefore, it can be ensured that channels corresponding to the first sequence and the second sequence of each transmit group are in the same resource block, thereby avoiding the limitation in the prior art that multiple channels must be in the same resource block, and relieving the scheduling limitation on resource allocation.

Optionally, in an embodiment, when downlink carrier aggregation is performed by using two carriers, the first channel is a physical downlink control channel PDCCH, and the second channel is a physical downlink shared channel PDSCH. On each carrier, one PDSCH can be scheduled, and each scheduled PDSCH corresponds to one PDCCH. A PDCCH and its corresponding PDSCH may be transmitted over the same carrier (non cross-carrier scheduling); or PDCCHs scheduled for two carriers are transmitted over the same carrier (cross-carrier scheduling), where the carrier may be a main carrier or a secondary carrier.

According to a result of detecting PDCCHs and corresponding PDSCHs, the user equipment generates M bits of ACK/NACK/DTX information, and feeds back the M bits of ACK/NACK/DTX information to a base station, where M is related to the number of activated carriers and the number of transport blocks allowed by the transmission mode configured on each activated carrier. For example, two carriers participate in carrier aggregation, and the transmission mode configured on each carrier is to use only one transport block for transmission. In this way, the user equipment generates 1 bit of corresponding ACK/NACK/DTX information for each transport block, and, for the two carriers, generates 2 bits of ACK/NACK/DTX information in total, such as "ACK, ACK". When the PDCCH corresponding to each transport block is detected correctly and the transport block is also detected correctly, the user equipment generates "ACK"; if the PDCCH is detected correctly but the transport block is not detected correctly, the user equipment generates "NACK"; and if the PDCCH is not detected correctly or the base station performs no scheduling on the corresponding carrier, the user equipment corresponds to a "DTX" state.

The resource for feeding back the generated M bits of ACK/NACK/DTX information is determined according to the detected PDCCH or high layer signaling, where the resource determined according to the high layer signaling may be specific to semi-persistent scheduling. At least two channels may be determined from each detected PDCCH, where each channel corresponds to a first sequence and a second sequence. Then, from the at least two first sequences corresponding to the at least two channels determined according to one PDCCH, one first sequence is selected as the first sequence of the transmit group; and, from the at least two second sequences corresponding to the at least two channels determined according to the PDCCH, one second sequence is selected as the second sequence of each transmit group. Specially, the first sequence is a reference signal sequence, and the second sequence is a data sequence.

The user equipment generates two transmit groups simultaneously according to the generated M bits of ACK/NACK/DTX information, where each transmit group includes one first sequence, one second sequence, and one modulation symbol. For each transmit group, the first sequence defines an antenna or an antenna port, and the second sequence is used to spread the modulation symbol located in the same transmit group as the second sequence. The user equipment multiplexes the spread modulation symbol and the first sequence into one resource block, and transmits the resource block over the antenna or antenna port defined by the first sequence.

Optionally, in another embodiment, in two transmit groups, the modulation symbol in one transmit group is a result of transforming the modulation symbol in the other transmit group. For example, the modulation symbol in one transmit group is the same as the modulation symbol in the other transmit group, or the modulation symbol in one transmit group is a conjugate of the modulation symbol in the other transmit group, or the modulation symbol in one transmit group is a negative conjugate of the modulation symbol in the other transmit group.

The first sequence and the second sequence in the two transmit groups are respectively selected from at least two first sequences and at least two second sequences corresponding to at least two third channels determined according to the detected same PDCCH. The first sequence and the second sequence selected for each transmit group may correspond to the same third channel or different third channels. For example, it is assumed that two third channels determined according to one PDCCH are channel 1 and channel 2, and then the first sequence in one transmit group may correspond to channel 1, and the second sequence in the transmit group also corresponds to channel 1; or, the first sequence in one transmit group corresponds to channel 1, and the second sequence in the transmit group corresponds to channel 2.

At least two third channels may be determined according to a detected PDCCH implicitly or explicitly. That at least two third channels are determined according to a detected PDCCH implicitly includes the following scenarios: if the PDCCH is transmitted over a downlink main carrier, the at least two third channels are determined implicitly according to a first control channel element that forms the PDCCH, a sequence number of a control channel element contiguous to the control channel element, control channel element, and a set mapping relationship between third channels and control channel elements, where each control channel element corresponds to one third channel, and therefore, the at least two third channels are in the same resource block. That at least two explicit channels are determined according to a detected PDCCH explicitly includes the following scenarios: if the PDCCH is transmitted over a downlink secondary carrier, the at least two third channels may be determined according to an ACK/NACK resource allocation indicator in the PDCCH. For example, a high layer configures at least two groups of channel resources first, where at least two third channels in each group of resources are in the same resource block, and then, according to an ACK/NACK resource indicator in the PDCCH, one group of channel resources in the resources configured by the high layer are allocated explicitly for use. Therefore, it can also be ensured that the determined group of channels are in the same resource block. In this way, the limitation that four channels must be in the same resource block is avoided, and the scheduling limitation on resource allocation is relieved.

For two activated carriers, three different types of channels: 2-bit channel, 3-bit channel, and 4-bit channel, can be selected, according to the number (1 or 2) of resource blocks allowed by the transmission mode on each carrier. According to the embodiment of the present invention, examples of the corresponding transmit diversity schemes are shown in Table 4 to Table 6 below. It should be noted that Table 4 to Table 6 are merely examples given for better understanding of the embodiment of the present invention, and the transmit diversity scheme in the embodiment of the present invention is not limited to the specific examples. For instance, in the examples shown in Table 4 to Table 6, a correspondence relationship between HARQ states and signals transmitted from antenna 1 and antenna 2 may be changed. In addition, in the examples shown in Table 4 to Table 6, if the first sequence (R) corresponds to channel 1 or channel 3, it is determined that antenna 1 is in use, which, however, shall not limit the protection scope of the embodiment of the present invention. The antenna in use may also be determined according to correspondence to other channels, and the antenna port in use may also be determined.

In Table 4 to Table 6, in the HARQ state column, "A" represents ACK, "N" represents NACK, "N/D" represents NACK/DTX, and "D" represents DTX. s0, s1, s2, and s3 represent QPSK modulation symbols -1, -j, j, and 1 respectively, * represents a conjugate operation, R represents a reference signal sequence, and D represents a data sequence. When the column corresponding to R is "1", it means that the corresponding reference sequence is selected. When the column corresponding to D is a modulation symbol, it means that the data sequence is selected, and that the modulation symbol is spread by using the selected data sequence. Channel 1 and channel 2 are determined according to a PDCCH or a high layer configuration, and channel 3 and channel 4 are determined according to another PDCCH. In determining the channel resources, channel 1 and channel 2 determined according to the user equipment in this embodiment are in the same resource block, and channel 3 and channel 4 are in the same resource block.

**Table 4: Transmit diversity scheme for 2-bit channel selection according to the embodiment of the present invention**

| HARQ state | | Antenna 1 | | | | | | | | Antenna 2 | | | | | | | |
|---|---|---|---|---|---|---|---|---|---|---|---|---|---|---|---|---|---|
| | | Channel 1 | | Channel 2 | | Channel 3 | | Channel 4 | | Channel 1 | | Channel 2 | | Channel 3 | | Channel 4 | |
| | | R | D | R | D | R | D | R | D | R | D | R | D | R | D | R | D |
| A | A | | | | | 1 | $s_3$ | | | | | | | | | 1 | $s_3{}^*$ |
| A | N/D | 1 | $s_0$ | | | | | | | | | 1 | $s_0{}^*$ | | | | |
| N/D | A | | | | | 1 | | | $s_3$ | | | | | | $-s_3{}^*$ | 1 | |
| N | N/D | 1 | | | $s_0$ | | | | | | $-s_0{}^*$ | 1 | | | | | |

**Table 5: Transmit diversity scheme for 3-bit channel selection according to the embodiment of the present invention**

| HARQ state | | | Antenna 1 | | | | | | | | Antenna 2 | | | | | | | |
|---|---|---|---|---|---|---|---|---|---|---|---|---|---|---|---|---|---|---|
| | | | Channel 1 | | Channel 2 | | Channel 3 | | Channel 4 | | Channel 1 | | Channel 2 | | Channel 3 | | Channel 4 | |
| | | | R | D | R | D | R | D | R | D | R | D | R | D | R | D | R | D |
| A | A | A | 1 | | | $s_3$ | | | | | | $-s_3^*$ | 1 | | | | | |
| A | N/D | A | 1 | | | $s_2$ | | | | | | $-s_2^*$ | 1 | | | | | |
| N/D | A | A | 1 | | | $s_1$ | | | | | | $-s_1^*$ | 1 | | | | | |
| N/D | N/D | A | | | | | 1 | $s_3$ | | | | | | | | | 1 | $s_3\,(s_3^*)$ |
| A | A | N/D | 1 | $s_3$ | | | | | | | | | 1 | $s_3^*$ | | | | |
| A | N/D | N/D | 1 | $s_2$ | | | | | | | | | 1 | $s_2^*$ | | | | |
| N/D | A | N/D | 1 | $s_1$ | | | | | | | | | 1 | $s_1^*$ | | | | |
| N/D | N/D | N | | | | | 1 | $s_0$ | | | | | | | | | 1 | $s_0\,(s_0^*)$ |
| N | N/D | D | 1 | $s_0$ | | | | | | | | | 1 | $s_0^*\,(s_0)$ | | | | |
| N/D | N | D | 1 | $s_0$ | | | | | | | | | 1 | $s_0^*\,(s_0)$ | | | | |

**Table 6: Transmit diversity scheme for 4-bit channel selection according to the embodiment of the present invention**

| HARQ state | | | | Antenna 1 | | | | | | | | Antenna 2 | | | | | | | |
|---|---|---|---|---|---|---|---|---|---|---|---|---|---|---|---|---|---|---|---|
| | | | | Channel 1 | | Channel 2 | | Channel 3 | | Channel 4 | | Channel 1 | | Channel 2 | | Channel 3 | | Channel 4 | |
| | | | | R | D | R | D | R | D | R | D | R | D | R | D | R | D | R | D |
| A | A | A | A | 1 | | | $s_3$ | | | | | | $-s_3^*$ | 1 | | | | | |
| A | N/D | A | A | | | | | 1 | $s_1$ | | | | | | | | | 1 | $s_1^*$ |
| N/D | A | A | A | 1 | | | $s_1$ | | | | | | $-s_1^*$ | 1 | | | | | |
| N/D | N/D | A | A | | | | | 1 | | | $s_3$ | | | | | | $-s_3^*$ | 1 | |
| A | A | A | N/D | 1 | | | $s_2$ | | | | | | $-s_2^*$ | 1 | | | | | |
| A | N/D | A | N/D | | | | | 1 | $s_0$ | | | | | | | | | 1 | $s_0^*$ |
| N/D | A | A | N/D | 1 | | | $s_0$ | | | | | | $-s_0^*$ | 1 | | | | | |
| N/D | N/D | A | N/D | | | | | 1 | | | $S_2$ | | | | | | $-s_2^*$ | 1 | |
| A | A | N/D | A | | | | | 1 | $s_3$ | | | | | | | | | 1 | $s_3$ |
| A | N/D | N/D | A | | | | | 1 | $s_2$ | | | | | | | | | 1 | $s_2^*$ |
| N/D | A | N/D | A | | | | | 1 | | | $s_1$ | | | | | | $-s_1^*$ | 1 | |
| N/D | N/D | N/D | A | | | | | 1 | | | $s_0$ | | | | | | $-s_0^*$ | 1 | |
| A | A | N/D | N/D | 1 | $s_3$ | | | | | | | | | 1 | $s_3^*$ | | | | |
| A | N/D | N/D | N/D | 1 | $s_2$ | | | | | | | | | 1 | $s_2^*$ | | | | |
| N/D | A | N/D | N/D | 1 | $s_1$ | | | | | | | | | 1 | $s_1^*$ | | | | |
| N/D | N | N/D | N/D | 1 | $s_0$ | | | | | | | | | 1 | $s_0^*$ | | | | |
| N | N/D | N/D | N/D | 1 | $s_0$ | | | | | | | | | 1 | $s_0^*$ | | | | |

EP 2 712 252 A1

In the embodiment of the present invention, no matter whether two third channels are obtained implicitly or explicitly, it is easy to ensure that the two third channels are located in the same resource block. Because the two third channels obtained implicitly are two channels completely contiguous to each other, and can be easily located in the same resource block; and the two third channels allocated explicitly can be located in the same resource block through a high layer configuration. The limitation in the prior art that four channels must be in the same resource block is avoided, and the scheduling limitation on PDCCH and resource allocation is relieved. According to a signal received from the user equipment, the base station needs to detect a channel and a modulation symbol selected for the signal, and then finds the corresponding HARQ state by mapping according to the detection result (the selected channel and modulation symbol).

In addition, the embodiment of the present invention can achieve a better transmit diversity gain. The following makes a comparison with the technology shown in Table 2 in a 4-bit channel selection scenario. In the following example, it is assumed that "0" represents NACK or DTX and "1" represents ACK. However, the embodiment of the present invention is not limited thereto. Instead, "1" may represent NACK or DTX, and "0" may represent ACK.

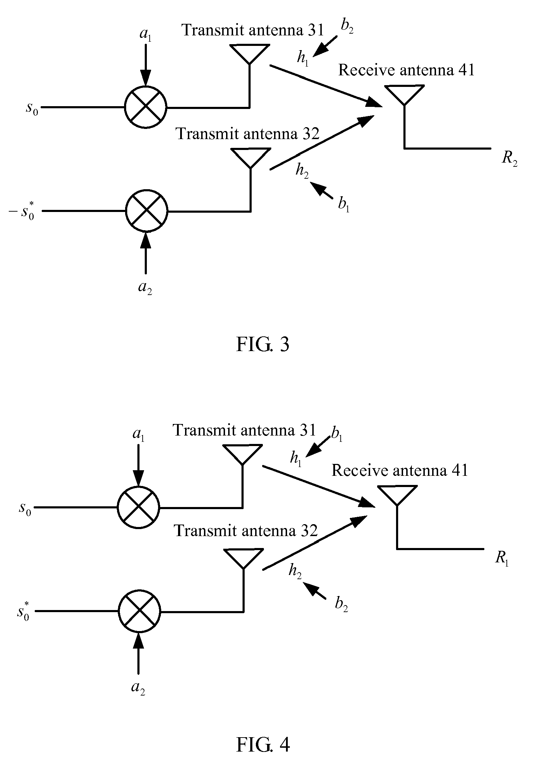

In the technology corresponding to Table 2, in a process of determining a HARQ state, the user equipment needs to distinguish whether the state of a transmitted signal is "0000" or "0100", because the same channels (channel 1 and channel 2) and modulation symbols (S0 and its conjugate or negative conjugate) are used for the two states. Their transmitting/receiving manners are illustrated in FIG. 3 and FIG. 4.

FIG. 2 is a schematic diagram of a data transmission manner with the HARQ state "0000" in the technology corresponding to Table 2, where, a1 represents a first sequence in a first transmit group of two transmit groups, and a2 represents a first sequence in a second transmit group of the two transmit groups; b1 and b2 are respectively second sequences in the first transmit group and the second transmit group; h1 and h2 are respectively channels from antennas, or antenna port 1 and antenna port 2, to a receive antenna; and s0 and s0* represent respectively modulation symbols in the first transmit group and the second transmit group. FIG. 3 is a schematic diagram of a data transmission manner with the HARQ state "0100" in the technology corresponding to Table 2, where, a1 represents a first sequence in a first transmit group of two transmit groups, and a2 represents a first sequence in a second transmit group of the two transmit groups; b1 and b2 are respectively second sequences in the second transmit group and the first transmit group; h1 and h2 are respectively channels from antennas, or antenna port 1 and antenna port 2, to a receive antenna; and s0 and -s0* represent respectively modulation symbols in the first transmit group and the second transmit group.

Channels from transmit an antenna 31 and an antenna 32 of the user equipment to a receive antenna 41 of the base station device are a result of channel estimation performed according to a reference signal sequence, R1 and R2 are received signals, and the antenna 31 and the antenna 32 correspond to the antenna 1 and the antenna 2 in Table 2 respectively, where,

$$R_1 = \begin{bmatrix} h_1 & h_2 \end{bmatrix} \begin{pmatrix} a_1 s_0 \\ a_2 s_0^* \end{pmatrix} = h_1 a_1 s_0 + h_2 a_2 s_0^*$$

$$R_2 = \begin{bmatrix} h_1 & h_2 \end{bmatrix} \begin{pmatrix} a_2 s_0 \\ -a_1 s_0^* \end{pmatrix} = h_1 a_2 s_0 - h_2 a_1 s_0^* .$$

Demodulation is performed according to the following steps:

(1) Despread the received signals to obtain two despread signals $r_1 = \sum a_1^* R_i$ and $r_2 = \sum a_2^* R_i$.

(2) Combine the despread signals, where there are two assumed combination manners, which are:

$$H_1 = \begin{pmatrix} h_1^* & h_2 \end{pmatrix} \begin{pmatrix} r_1 \\ r_2^* \end{pmatrix} \quad \text{and} \quad H_2 = \begin{pmatrix} -h_2 & h_1^* \end{pmatrix} \begin{pmatrix} r_1^* \\ r_2 \end{pmatrix} .$$

(3) Compare $|H_1|$ with $|H_2|$; if $|H_1| > |H_2|$, the HARQ state is "0000"; and otherwise, the HARQ state is "0100".

If the transmitted HARQ state is "0000", the received signal is $R_1$. According to the above steps, the following can be obtained:

$$H_1 = \begin{pmatrix} h_1^* & h_2 \end{pmatrix} \begin{pmatrix} r_1 \\ r_2^* \end{pmatrix} = \begin{pmatrix} h_1^* & h_2 \end{pmatrix} \begin{pmatrix} h_1 \\ h_2^* \end{pmatrix} s_0 = \left( |h_1|^2 + |h_2|^2 \right) s_0$$

$$H_2 = \begin{pmatrix} -h_1 & h_2^* \end{pmatrix} \begin{pmatrix} r_1^* \\ r_2 \end{pmatrix} = \begin{pmatrix} -h_1 & h_2^* \end{pmatrix} \begin{pmatrix} h_1^* \\ h_2 \end{pmatrix} s_0^* = \left( |h_2|^2 - |h_1|^2 \right) s_0^*$$

Similarly, if the transmitted HARQ state is "0100", the received signal is $R_2$. According to the above steps, the following can be obtained:

$$H_1 = \begin{pmatrix} h_2^* & h_1 \end{pmatrix} \begin{pmatrix} r_1 \\ r_2^* \end{pmatrix} = \begin{pmatrix} h_2^* & h_1 \end{pmatrix} \begin{pmatrix} -h_2 \\ h_1^* \end{pmatrix} s_0^* = \left( |h_1|^2 - |h_2|^2 \right) s_0^*$$

$$H_2 = \begin{pmatrix} -h_2 & h_1^* \end{pmatrix} \begin{pmatrix} r_1^* \\ r_2 \end{pmatrix} = \begin{pmatrix} -h_2 & h_1^* \end{pmatrix} \begin{pmatrix} -h_2^* \\ h_1 \end{pmatrix} s_0 = \left( |h_2|^2 + |h_1|^2 \right) s_0$$

Then $|H_1|$ and $|H_2|$ are compared to determine the transmitted HARQ state.

As seen from the above analysis, in the technology shown in Table 2, a distance between $|H_1|$ and $|H_2|$ is $|(|h_2|^2+|h_1|^2)|-|(|h_2|^2-|h_1|^2)|$ or $|(|h_2|^2+|h_1|^2)|-|(|h_1|^2-|h_2|^2)|$. This distance for judgment is not great and therefore is easily affected by noise, which may cause misjudgment of the HARQ state.

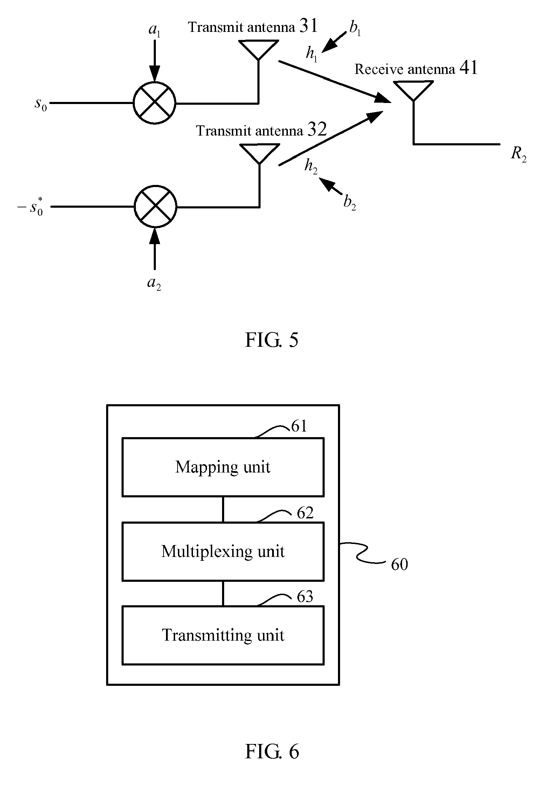

In addition, it is assumed that the transmit diversity scheme shown in Table 6 in the embodiment of the present invention is applied. In the detection process, the user equipment needs to distinguish whether the HARQ state of the transmitted signal is "NACK/DTX, NACK, NACK/DTX, NACK/DTX" or "NACK/DTX, ACK, ACK, NACK/DTX", because the same channels (channel 1 and channel 2) and modulation symbols (SO and its conjugate or negative conjugate) are used for the two states. Their transmitting/receiving manners are illustrated in FIG. 4 and FIG. 5.

Channels from the transmit antennas 31 and 32 of the user equipment to the receiving channel 41 of the base station device are a result of channel estimation performed according to a reference signal sequence, R1 and R2 are received signals, meanings of other symbols are similar to those in FIG. 3, and the antenna 31 and antenna 32 correspond to the antenna 1 and antenna 2 in Table 6 respectively, where,

$$R_1 = \begin{bmatrix} h_1 & h_2 \end{bmatrix} \begin{pmatrix} a_1 s_0 \\ a_2 s_0^* \end{pmatrix} = h_1 a_1 s_0 + h_2 a_2 s_0^*$$

$$R_2 = \begin{bmatrix} h_1 & h_2 \end{bmatrix} \begin{pmatrix} a_2 s_0 \\ -a_1 s_0^* \end{pmatrix} = h_1 a_2 s_0 - h_2 a_1 s_0^*$$

Demodulation is performed according to the following steps:

(1) Despread the received signals to obtain two despread signals $r_1 = \sum a_1^* R_i$ and $r_2 = \sum a_2^* R_i$.

(2) Combine the despread signals, where there are two assumed combination manners, which are:

$$H_1 = \begin{pmatrix} h_1^* & h_2 \end{pmatrix} \begin{pmatrix} r_1 \\ r_2^* \end{pmatrix}, \text{ and } H_2 = \begin{pmatrix} -h_2 & h_1^* \end{pmatrix} \begin{pmatrix} r_1^* \\ r_2 \end{pmatrix}$$

(3) Compare $|H_1|$ with $|H_2|$; if $|H_1|>|H_2|$, the HARQ state is "NACK/DTX, NACK, NACK/DTX, NACK/DTX"; and otherwise, the HARQ state is "NACK/DTX, ACK, ACK, NACK/DTX".

If the transmitted HARQ state is "NACK/DTX, NACK, NACK/DTX, NACK/DTX", the received signal is $R_1$. According to the above steps, the following can be obtained:

$$H_1 = \begin{pmatrix} h_1^* & h_2 \end{pmatrix} \begin{pmatrix} r_1 \\ r_2^* \end{pmatrix} = \begin{pmatrix} h_1^* & h_2 \end{pmatrix} \begin{pmatrix} h_1 \\ h_2^* \end{pmatrix} s_0 = \left( |h_1|^2 + |h_2|^2 \right) s_0$$

$$H_2 = \begin{pmatrix} -h_2 & h_1^* \end{pmatrix} \begin{pmatrix} r_1^* \\ r_2 \end{pmatrix} = \begin{pmatrix} -h_2 & h_1^* \end{pmatrix} \begin{pmatrix} h_1^* \\ h_2 \end{pmatrix} s_0^* = 0$$

Similarly, if the transmitted HARQ state is "NACK/DTX, ACK, ACK, NACK/DTX", the received signal is $R_2$. According to the above demodulation steps, the following can be obtained:

$$H_1 = \begin{pmatrix} h_1^* & h_2 \end{pmatrix} \begin{pmatrix} r_1 \\ r_2^* \end{pmatrix} = \begin{pmatrix} h_1^* & h_2 \end{pmatrix} \begin{pmatrix} -h_2 \\ h_1^* \end{pmatrix} s_0^* = 0$$

$$H_2 = \begin{pmatrix} -h_2 & h_1^* \end{pmatrix} \begin{pmatrix} r_1^* \\ r_2 \end{pmatrix} = \begin{pmatrix} -h_2 & h_1^* \end{pmatrix} \begin{pmatrix} -h_2^* \\ h_1 \end{pmatrix} s_0 = \left( |h_2|^2 + |h_1|^2 \right) s_0$$

Therefore, it can be seen that the distance between $|H_1|$ and $|H_2|$ is $\left| |h_2|^2 + |h_1|^2 \right|$, which is far greater than the distance obtained in the method corresponding to Table 2. Therefore, the embodiment of the present invention prevents misjudgment of the HARQ state caused by noise. The impact of noise is little, and therefore a better transmit diversity gain is achieved.

FIG. 6 is a schematic block diagram of a user equipment according to an embodiment of the present invention. The user equipment 60 in FIG. 6 includes a mapping unit 61, a multiplexing unit 62, and a transmitting unit 63.

The mapping unit 61 is configured to map a state expressed by at least two information elements into two transmit groups, where, the state expressed by the at least two information elements is a response to at least one channel group, where the channel group includes one first channel and one second channel, and each transmit group of the two transmit groups includes one first sequence, one second sequence, and one modulation symbol, where a first sequence and a second sequence in each transmit group are determined according to a first channel in the same channel group of the at least one channel group, where the first sequence in the transmit group defines an antenna or an antenna port, and the second sequence is used to spread a modulation symbol located in the same transmit group as the second sequence.

The multiplexing unit 62 is configured to use a second sequence in a transmit group mapped by the mapping unit 61 to spread a modulation symbol located in the same transmit group, and multiplex the spread modulation symbol and a first sequence located in the same transmit group as the second sequence into one resource block.

The transmitting unit 63 is configured to transmit the resource block over an antenna or an antenna port defined by the first sequence multiplexed by the multiplexing unit 62 in the resource block.

In the embodiment of the present invention, a first sequence and a second sequence in each transmit group are determined according to only one first channel. Therefore, it can be ensured that channels corresponding to the first sequence and the second sequence of each transmit group are in the same resource block, thereby avoiding the limitation in the prior art that multiple channels must be in the same resource block, and relieving the scheduling limitation on resource allocation.

Optionally, in an embodiment, the user equipment may further include a setting unit.

The setting unit is configured to set a modulation symbol in one transmit group of the two transmit groups mapped by the mapping unit 61 to be the same as a modulation symbol in the other transmit group, or, set a modulation symbol in one transmit group of the two transmit groups mapped by the mapping unit to be a conjugate or negative conjugate of a modulation symbol in the other transmit group.

Optionally, in an embodiment, the user equipment further includes a selecting unit.

The selecting unit is configured to select the first sequence in each transmit group mapped by the mapping unit 61 from at least two first sequences corresponding to at least two third channels determined according to the same PDCCH in the at least one channel group, and select the second sequence in each transmit group mapped by the mapping unit 61 from at least two second sequences corresponding to the at least two third channels determined according to the same PDCCH.

Optionally, in an embodiment, the user equipment further includes both the selecting unit and the setting unit.

Optionally, in an embodiment, the first channel is a PDCCH, and the second channel is a PDSCH. For example, the first sequence in each transmit group mapped by the mapping unit 61 is selected from at least two first sequences corresponding to at least two third channels determined according to the same PDCCH, and the second sequence in each transmit group mapped by the mapping unit 61 is selected from at least two second sequences corresponding to the at least two third channels determined according to the same PDCCH.

Optionally, in another embodiment, the first sequence in each transmit group mapped by the mapping unit 61 is a reference signal sequence, and the second sequence in each transmit group mapped by the mapping unit 62 is a data sequence.

Optionally, in another embodiment, the modulation symbol in one transmit group of the two transmit groups mapped by the mapping unit 61 is the same as the modulation symbol in the other transmit group, or, the modulation symbol in one transmit group of the two transmit groups mapped by the mapping unit is a conjugate or negative conjugate of the modulation symbol in the other transmit group.

Optionally, in another embodiment, the at least two information elements used by the mapping unit 61 are 2-bit information elements, 3-bit information elements, or 4-bit information elements. The state expressed by the at least two information elements used by the mapping unit 61 is expressed by at least two state bits, and each state bit of the at least two state bits includes one of the following: ACK, NACK, NACK/DTX, and DTX.

Optionally, in another embodiment, at least two third channels may be determined according to a detected PDCCH implicitly or explicitly. That at least two third channels are determined according to a detected PDCCH implicitly includes the following scenarios: if the PDCCH is transmitted over a downlink main carrier, the at least two third channels are determined implicitly according to a first control channel element that forms the PDCCH, a sequence number of a control channel element contiguous to the control channel element, control channel element, and a set mapping relationship between third channels and control channel elements, where each control channel element corresponds to one channel, and therefore, the at least two third channels are in the same resource block. That at least two third channels are determined according to a detected PDCCH explicitly includes the following scenarios: if the PDCCH is transmitted over a downlink secondary carrier, the at least two third channels are determined according to an ACK/NACK resource allocation indicator in the PDCCH. For example, a high layer configures at least two groups of channel resources first, where at least two third channels in each group of resources are in the same resource block, and then, according to an ACK/NACK resource indicator in the PDCCH, one group of channel resources in the resources configured by the high layer are allocated explicitly for use. Therefore, it can also be ensured that the determined group of channels are in the same resource block. In this way, the limitation that four channels must be in the same resource block is avoided, and the scheduling limitation on resource allocation is relieved. The third channel may be the channels shown in Table 1 to Table 6.

A communication system according to an embodiment of the present invention may include the user equipment 60.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for detailed working processes of the foregoing system, apparatus, and unit, reference may be to the corresponding processes in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A data transmission method, comprising:

    mapping a state expressed by at least two information elements into two transmit groups, wherein, the state expressed by the at least two information elements is a response to at least one channel group, wherein the channel group comprises one first channel and one second channel, and each transmit group of the two transmit groups comprises one first sequence, one second sequence, and one modulation symbol, wherein the first sequence and the second sequence in the each transmit group are determined according to a first channel in one channel group of the at least one channel group, wherein the first sequence in the transmit group defines an antenna or an antenna port, and the second sequence is used to spread a modulation symbol located in the each transmit group as the second sequence;
    using the second sequence in the transmit group to spread the modulation symbol located in the same transmit group, and multiplexing the spread modulation symbol and the first sequence located in the each transmit group as the second sequence into one resource block; and
    transmitting the resource block over an antenna or an antenna port defined by the first sequence multiplexed in the resource block.

2.  The method according to claim 1, wherein the first channel is a physical downlink control channel PDCCH, and the second channel is a physical downlink shared channel PDSCH.

3.  The method according to claim 1, wherein the first sequence is a reference signal sequence, and the second sequence is a data sequence.

4.  The method according to claim 1, wherein a modulation symbol in one transmit group of the two transmit groups is the same as a modulation symbol in the other transmit group, or, a modulation symbol in one transmit group of the two transmit groups is a conjugate or negative conjugate of a modulation symbol in the other transmit group.

5.  The method according to claim 1, wherein the at least two information elements is a 2-bit information element, a 3-bit information element, or a4-bit information element.

6.  The method according to claim 1, wherein the state expressed by the at least two information elements is expressed by at least two state bits, wherein each state bit of the at least two state bits comprises one of the following: ACK, NACK, NACK/DTX, and DTX.

7.  The method according to any one of claims 2 to 6, wherein that the first sequence and the second sequence in each transmit group are determined according to a first channel in the one channel group of the at least one channel group comprises that:

the first sequence in each transmit group is selected from at least two first sequences corresponding to at least two third channels, wherein the at least two third channels isdetermined according to one PDCCH in the at least one channel group; and

the second sequence in each transmit group is selected from at least two second sequences corresponding to the at least two third channels, wherein the at least two third channels is determined according to the PDCCH.

8. The method according to claim 7, wherein:

the at least two third channels determined according to the same PDCCH in the at least one channel group are determined implicitly or explicitly.

9. The method according to claim 8, wherein that the at least two third channels determined according to one PDCCH in the at least one channel group are determined implicitly comprises that:

the at least two third channels determined according to the PDCCH are determined according to a first control channel element of the PDCCH, a control channel element whose sequence number is contiguous to the control channel element, and a set mapping relationship between third channels and control channel elements

10. The method according to claim 9, wherein the PDCCH is transmitted over a main carrier.

11. The method according to claim 8, wherein that the at least two third channels determined according to the same PDCCH in the at least one channel group are determined explicitly comprises that:

the at least two third channels determined according to the PDCCH are determined according to an ACK/NACK resource allocation indicator in the PDCCH.

12. The method according to claim 11, wherein the PDCCH is transmitted over a secondary carrier.

13. A user equipment, comprising:

a mapping unit, configured to map a state expressed by at least two information elements into two transmit groups, wherein, the state expressed by the at least two information elements is a response to at least one channel group, wherein the channel group comprises one first channel and one second channel, and each transmit group of the two transmit groups comprises one first sequence, one second sequence, and one modulation symbol, wherein the first sequence and the second sequence in each transmit group are determined according to a first channel in one channel group of the at least one channel group, wherein the first sequence in the transmit group defines an antenna or an antenna port, and the second sequence is used to spread a modulation symbol located in the transmit group as the second sequence;
a multiplexing unit, configured to use a second sequence in the transmit group mapped by the mapping unit to spread the modulation symbol located in the same transmit group, and multiplex the spread modulation symbol and a first sequence located in the transmit group as the second sequence into one resource block; and
a transmitting unit, configured to transmit the resource block over an antenna or an antenna port defined by the first sequence multiplexed by the multiplexing unit in the resource block.

14. The user equipment according to claim 13, wherein the first channel is a physical downlink control channel PDCCH, and the second channel is a physical downlink shared channel PDSCH.

15. The user equipment according to claim 13, wherein the first sequence in each transmit group mapped by the mapping unit is a reference signal sequence, and the second sequence in each transmit group mapped by the mapping unit is a data sequence.

16. The user equipment according to claim 13, wherein the user equipment further comprises a setting unit, wherein:

the setting unit is configured to set a modulation symbol in one transmit group of the two transmit groups mapped by the mapping unit to be the same as a modulation symbol in the other transmit group, or, set a modulation symbol in one transmit group of the two transmit groups mapped by the mapping unit to be a conjugate or negative conjugate of a modulation symbol in the other transmit group.

17. The user equipment according to claim 13, wherein the at least two information elements is 2-bit information element, 3-bit information element, or 4-bit information element.

18. The user equipment according to claim 13, wherein the state expressed by the at least two information elements is expressed by at least two state bits, wherein each state bit of the at least two state bits comprises one of the following: ACK, NACK, NACK/DTX, and DTX.

19. The user equipment according to any one of claims 14 to 18, wherein the user equipment further comprises a selecting unit, wherein:

the selecting unit is configured to select the first sequence in each transmit group mapped by the mapping unit from at least two first sequences corresponding to at least two third channels determined according to one PDCCH in the at least one channel group, and select the second sequence in each transmit group mapped by the mapping unit from at least two second sequences corresponding to the at least two third channels determined according to the sameone PDCCH.

20. The user equipment according to claim 19, wherein:

the mapping unit is specifically configured to: dmap a state expressed by at least two information elements into two transmit groups, wherein the state expressed by the at least two information elements is a response to at least one channel group, wherein the channel group comprises one first channel and one second channel, and each transmit group the two transmit groups comprises one first sequence, one second sequence, and one modulation symbol, wherein a first sequence and a second sequence in each transmit group are determined according to a first channel in the same channel group of the at least one channel group, wherein the first sequence in the transmit group defines an antenna or an antenna port, and the second sequence is used to spread a modulation symbol located in the same transmit group as the second sequence; and determine the at least two third channels, which are determined according to one PDCCH, according to a first control channel element of the PDCCH of one channel group of the at least one channel group, a control channel element whose sequence number is contiguous to the control channel element, and a set mapping relationship between third channels and control channel elements.

21. The user equipment according to claim 19, wherein:

the mapping unit is specifically configured to: map a state expressed by at least two information elements into two transmit groups, wherein the state expressed by the at least two information elements is a response to at least one channel group, wherein the channel group comprises one first channel and one second channel, and each transmit group of the two transmit groups comprises one first sequence, one second sequence, and one modulation symbol, wherein a first sequence and a second sequence in each transmit group are determined by determined according to a first channel in the same channel group of the at least one channel group, wherein the first sequence in the transmit group defines an antenna or an antenna port, and the second sequence is used to spread a modulation symbol located in the same transmit group as the second sequence; and determine the at least two third channels, which are determined according to one PDCCH, according to an ACK/NACK resource allocation indicator in the PDCCH of one channel group of the at least one channel group.

Map a state expressed by information elements into two transmit groups, where each transmit group includes one first sequence, one second sequence, and one modulation symbol, and the first sequence and second sequence in each transmit group are determined according to a first channel in the same channel group of the at least one channel group

101

Use a second sequence in a transmit group to spread a modulation symbol located in the same transmit group, and multiplex the spread modulation symbol and a first sequence located in the same transmit group as the second sequence into one resource block

102

Transmit the resource block over an antenna or an antenna port defined by the first sequence multiplexed in the resource block

103

FIG. 1

$a_1$    Transmit antenna 31    $b_1$

$h_1$    Receive antenna 41

$s_0$

Transmit antenna 32

$h_2$

$s_0^*$

$b_2$

$R_1$

$a_2$

FIG. 2

FIG. 3

FIG. 4

$a_1$

Transmit antenna 31     $b_1$

$h_1$

Receive antenna 41

$s_0$

Transmit antenna 32

$h_2$

$R_2$

$-s_0^*$

$b_2$

$a_2$

FIG. 5

61
Mapping unit

62
Multiplexing unit
60

63
Transmitting unit

FIG. 6

<table>
<tr><td colspan="2">**INTERNATIONAL SEARCH REPORT**</td><td>International application No.<br>**PCT/CN2012/076944**</td></tr>
</table>

**A. CLASSIFICATION OF SUBJECT MATTER**

H04W 72/04 (2009.01) i

According to International Patent Classification (IPC) or to both national classification and IPC

**B. FIELDS SEARCHED**

Minimum documentation searched (classification system followed by classification symbols)

IPC: H04W, H04L, H04Q, G06F, H04B

Documentation searched other than minimum documentation to the extent that such documents are included in the fields searched

Electronic data base consulted during the international search (name of data base and, where practicable, search terms used)

CNPAT, WPI, EPODOC, IEEE, CNKI: transmit, transfer, emit, data, sequence, state, map, channel, modulate, spread spectrum, multiplex, response, resource, schedule, distribute, assign

**C. DOCUMENTS CONSIDERED TO BE RELEVANT**

| Category* | Citation of document, with indication, where appropriate, of the relevant passages | Relevant to claim No. |
|---|---|---|
| A | CN 101800572 A (NEW POSTCOM EQUIPMENT CO., LTD.), 11 August 2010 (11.08.2010), the whole document | 1-21 |
| A | US 2010/0098134 A1 (DIXON, G.), 22 April 2010 (22.04.2010), the whole document | 1-21 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 July 2012 (09.07.2012) | **16 August 2012 (16.08.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**QIN, Jingchan**<br><br>Telephone No.: (86-10) **62413657** |
|---|---|

Form PCT/ISA/210 (second sheet) (July 2009)

## INTERNATIONAL SEARCH REPORT
Information on patent family members

| International application No. |
| --- |
| **PCT/CN2012/076944** |

| Patent Documents referred in the Report | Publication Date | Patent Family | Publication Date |
| --- | --- | --- | --- |
| CN 101800572 A | 11.08.2010 | None | |
| US 2010/0098134 A1 | 22.04.2010 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110162122